# EUROPÄISCHE PATENTSCHRIFT

(11) **EP 1 075 161 B1**
(45) Veröffentlichungstag und Bekanntmachung des Hinweises auf die Patenterteilung: **31.03.2004**
(21) Anmeldenummer: 00440222.8
(22) Anmeldetag: 31.07.2000
(51) Int. Cl.: H04Q 7/38, G06F 1/00

(54) **Verfahren und Vorrichtungen zur Zugangskontrolle eines Benutzers eines Benutzerrechners zu einem Zugangsrechner**
Method and devices for controlling access of a user from a user's computer to an access computer
Procédé et appareils pour le contrôle d'accès d'un utilisateur à partir de son ordinateur vers un ordinateur d'accès

(30) Priorität: 05.08.1999 DE 19936226
(43) Veröffentlichungstag der Anmeldung: 07.02.2001
(73) Patentinhaber: ALCATEL, 75008 Paris (FR)
(72) Erfinder: Schmitz, Bernard, 71272 Renningen-Malmsheim (DE)
(74) Vertreter: Rausch, Gabriele, Dr.

(56) Entgegenhaltungen:
- EP-A- 0 817 518
- EP-A- 0 844 551
- EP-A- 0 875 871
- DE-C- 19 722 424

## Beschreibung

Die vorliegende Erfindung betrifft ein Verfahren gemäß dem Oberbegriff des Anspruchs 1, sowie einen Zugangsrechner gemäß dem Oberbegriff des Anspruchs 10 und einen Passwortrechner gemäß dem Oberbegriff des Anspruchs 11 hierfür.

Die Zugangsberechtigung eines Benutzers eines Benutzerrechners, der in ein Rechnernetzwerk eingebunden ist, wird üblicherweise kontrolliert, indem der Benutzer an dem Benutzerrechner seine Benutzerkennung und sein Passwort angibt, beides von dem Benutzerrechner an einen Zugangsrechner des Rechnernetzwerkes übertragen wird und dieser nur dann die Betriebsmittel des Rechnernetzwerkes zur Benutzung an dem Benutzerrechner freigibt, wenn das momentan für eine Benutzerkennung gültige Passwort angegeben worden ist.

Ein solches Passwort wird von den meisten Benutzern sehr lange Zeit verwendet, so dass stets die Gefahr eines Ausspionierens und missbräuchlichen Verwendens des Passwortes besteht. Diese Gefahr ist umso größer, wenn die Verbindung des Benutzerrechners mit dem Rechnernetzwerk über ein öffentliches Telekommunikationsnetzwerk, z.B. das Internet führt.

Zur Erhöhung der Sicherheit werden deshalb zeitlich befristet gültige Passwörter verwendet. In bekannten Verfahren werden solche Passwörter netzwerkseitig von einem Zugangsrechner eines Rechnernetzwerkes und parallel dazu benutzerseitig von einer sogenannten "Smartcard" gebildet, die der Benutzer mit sich führen muß. Eine solche Smartcard wird auch als Token (="Zugangsschlüssel") bezeichnet und sieht beispielsweise wie ein kompakter Taschenrechner mit Tastatur und Anzeigefeld aus. Üblicherweise gibt ein Benutzer seine PIN (Personal Identification Number) in eine solche Smartcard ein. Dann errechnet die Smartcard in Abhängigkeit von einer mit dem Zugangsrechner synchronisierten Relativzeit nach einem vorbestimmten Algorithmus ein zeitlich befristet gültiges Passwort. Wird dieses Passwort von dem Benutzer an einem Benutzerrechner eingegeben und an den Zugangsrechner übermittelt, vergleicht der Zugangsrechner das Passwort mit einem Passwort, das der Zugangsrechner parallel zu der Smartcard nach dem genannten Algorithmus in Abhängigkeit von der genannten Relativzeit ermittelt hat. Stimmen die Passwörter überein, erhält der Benutzer mit dem Benutzerrechner Zugang zu den Betriebsmitteln des Rechnernetzwerkes. Eine solche Smartcard ist jedoch teuer und muß von dem Benutzer stets mitgeführt werden. Außerdem können durch mangelhafte Zeitsynchronisierung zwischen Zugangsrechner und Smartcard leicht Fehlfunktionen auftreten, so dass der Benutzer von der Smartcard kein gültiges Passwort und somit auch keinen Zugang zu dem Rechnernetzwerk erhält.

Die gleiche Problematik ergibt sich, wenn einem Benutzer auf diese Art Zugang zu anders gearteten Leistungen, z.B. an einem Verkaufsautomaten, angeboten werden soll.

EP 0 875 871 offenbart ein Verfahren zur Vergabe von sogenannten Transaktionsnummern für einen Benutzer, d.h. zeitlich begrenzt gültigen Passwörtern, bei welchem von einem Benutzerrechner eine Verbindung über ein Datennetz zu einem Autorisierungsrechner aufgebaut wird und der Autorisierungsrechner ein Passwort für den Benutzer ermittelt und an einen Funkempfänger des Benutzers ausgibt. Das Passwort wird dann an den Benutzerrechner übermittelt, welcher das Passwort wieder an den Autorisierungsrechner übermittelt. Der Autorisierungsrechner initiiert dann, wenn das von dem Benutzerrechner empfangene Passwort mit dem vorher ermittelten Passwort übereinstimmt, eine Verbindung zwischen dem Benutzerrechner und einem Empfänger.

DE 197 22 424 beschreibt ebenfalls, entsprechend der im letzten Abschnitt genannte Schrift, ein Verfahren, bei welchem zwei Verbindungen über zwei unabhängige Netze benutzt werden, um eine sichere Passwortübermittlung von einer Zugangseinrichtung zu einem Benutzer zu ermöglichen. Dabei wird entweder zunächst eine Verbindung über ein Datennetz zu der Zugangseinrichtung aufgebaut und anschließend von der Zugangseinrichtung eine Verbindung zu einem Mobiltelefon des Benutzers hergestellt, oder aber von dem Mobiltelefon eine Verbindung zur Zugangseinrichtung aufgebaut, um ein Paßwort zu empfangen, das in eine mit der Zugangseinrichtung über ein Dantennetz verbundene Datenverarbeitungseinrichtung eingegeben werden kann.

Bei den genannten Verfahren wird stets davon ausgegangen, dass die Zuordnungen von Benutzern und Rufnummern des Mobilfunk-Endgeräts (oder entsprechender Endgeräte) im Zugangsrechner oder Autorisierungsrechner bekannt ist.

Aufgabe der Erfindung ist es , ein Verfahren sowie Vorrichtungen vorzusehen, mit denen ein Benutzer auf bequeme und benutzerfreundliche Weise ein Passwort erhält, mit dem der Benutzer sich an einem Benutzerrechner einen sicheren Zugang bei einem Zugangsrechner verschaffen kann, ohne dass die Rufnummer eines Endgeräts beim Zugangsrechner bekannt sein muss.

Diese Aufgabe wird durch ein Verfahren gemäß der technischen Lehre des Anspruchs 1, sowie einen Zugangsrechner gemäß der technischen Lehre des Anspruchs 10 und einen Passwortrechner gemäß der technischen Lehre des Anspruchs 11 gelöst. Weitere vorteilhafte Ausgestaltungen der Erfindung sind den abhängigen Ansprüchen und der Beschreibung zu entnehmen.

Der Erfindung liegt der Gedanke zugrunde, dass einem Benutzer eines Benutzerrechners für einen Zugang zu einem Rechnernetzwerk oder z.B. auch zu einem Verkaufsautomaten von einem Passwortrechner ein Passwort zur Verfügung gestellt wird. Der Zugang des Benutzers zu den Betriebsmitteln des Rechnernetzwerkes wird dabei durch einen in das Rechnernetzwerk eingebundenen Zugangsrechner kontrolliert. Der Benutzer stellt mit seinem Mobilfunk-Endgerät eine Verbindung über ein Mobilfunk-Telekommunikationsnetz zu dem Passwortrechner her, der anhand einer Benutzerkennung, z.B. der Rufnummer des Mobilfunk-Endgerätes ermittelt, welchem Benutzer das Mobilfunk-Endgerät zugeordnet ist. Der Passwortrechner ermittelt dann ein Passwort für den Benutzer und sendet es an das Mobilfunk-Endgerät des Benutzers, das diese dann anzeigt. Parallel dazu versendet der Passwortrechner das Passwort über das Rechnernetzwerk auch an den Zugangsrechner. Gibt der Benutzer das Passwort anschliessend an dem Benutzerrechner ein, sendet der Benutzerrechner das Passwort an den Zugangsrechner. Der Zugangsrechner vergleicht dann das von dem Benutzerrechner empfangene Passwort mit dem von dem Passwortrechner empfangenen Passwort und wenn beide Passwörter übereinstimmen, gewährt der Zugangsrechner dem Benutzerrechner Zugang zu den Betriebsmitteln des Rechnernetzwerkes. Dadurch dass die beiden Passwörter auf getrennten, voneinander unabhängigen Verbindungen, dem Mobilfunk-Telekommunikationsnetz einerseits und dem Rechnernetzwerk andrerseits versendet werden, ist eine ausreichende Übertragungssicherheit und Sicherheit gegen Ausspionieren gewährleistet. Weiterhin ist eine Passwortübertragung auf einem Mobilfunk-Telekommunikationsnetz üblicherweise durch vielfältige Sicherheitsmechanismen, z.B. Verschlüsselung, und Authentifizierung geschützt. Viele Benutzer verfügen heute schon über ein Mobilfunk-Endgerät oder gar über einen Benutzerrechner mit einem integrierten Mobilfunk-Endgerät, so dass durch die Erfindung ein umständliches Mitführen und teures Beschaffen einer Smartcard zur Passwortgenerierung entbehrlich wird. Es besteht auch keine Gefahr, dass die Smartcard verlorengeht. Ein Synchronisationsproblem zwischen einer solchen Smartcard und einem Passwortrechner kann gar nicht erst auftreten. Ein Passwort kann sogar von dem Mobilfunk-Endgerät des Benutzers z.B. über eine Infrarot-Strecke, eine Verbindung der jüngst aufkommenden Bluetooth-Technologie oder bei einem Kombinationsgerät aus Benutzerrechner und Mobilfunk-Endgerät direkt in den Benutzerrechner übertragen werden, so dass auch lange, aus alphanumerischen und nicht nur aus Ziffern bestehende und damit besonders sichere Passwörter bequem und ohne umständliches Eintippen in einen Benutzerrechner verwendbar sind.

Die Sicherheit kann noch weiter erhöht werden, wenn der Passwortrechner auf der Verbindung mit dem Mobilfunk-Endgerät eine Authentifikationskennung empfängt und nur dann, wenn die Authentifikationskennung im Zusammenhang mit der Benutzerkennung den Benutzer zur Abfrage eines Passwortes über das Mobilfunk-Endgerät authorisiert, das Passwort an das Mobilfunk-Endgerät versendet. Die Benutzerkennung und die Authentifikationskennung können in einer Ausgestaltung der Erfindung z.B. an dem Mobilfunk-Endgerät z.B. in Form einer PIN (Personal Identification Number) durch den Benutzer eingegeben werden und von diesem an den Passwortrechner versendet werden. Es ist auch möglich, dass die Benutzerkennung und die Authentifikationskennung auf einer SIM-Card (SIM = Subscriber Idendity Module) des Benutzers gespeichert sind und dort von dem Mobilfunk-Endgerät ausgelesen werden.

In einer weiteren vorteilhaften Ausgestaltung der Erfindung werden die Benutzerkennung sowie die Authentifikationskennung von einem Authentifikationszentrum des Mobilfunk-Telekommunikationsnetzes an den Passwortrechner versendet. Dabei kann es sich z.B. um dasjenige Authentifikationszentrum handeln, das den berechtigten Zugang des Benutzers zu dem Mobilfunk-Telekommunikationsnetz sicherstellt. Die Benutzerkennung und die Authentifikationskennung kann das Authentifikationszentrum beispielsweise für den Benutzer eigens zum Zwecke der Passwortabfrage gespeichert haben. In einer anderen Variante kann das Authentifikationszentrum auch als Benutzerkennung und Authentifikationskennung zur Passwortabfrage solche Kennungen verwenden, die für den Zugang zu dem Mobilfunk-Telekommunikationsnetz erforderlich sind.

Vorteilhafterweise wird das Passwort durch den Passwortrechner jeweils neu, z.B. als Zufallszahl, generiert und verfällt jedesmal, wenn es der Benutzer für einen Zugang zu den Betriebsmitteln des Rechnernetzwerkes verwendet hat. So ist ein eventueller Missbrauch eines Passwortes auf einen einmaligen Zugang zu dem Rechnernetzwerk beschränkt. Eine weitere Steigerung der Sicherheit kann erreicht werden, indem ein neu generiertes Passwort nach einer vorbestimmten Zeitspanne verfällt, und der Zugangsrechner das jeweilige Passwort nur bei Verwendung innerhalb einer vorbestimmten Zeitspanne als gültiges Passwort für einen Zugang zu den Betriebsmitteln des Rechnernetzwerkes akzeptiert.

Im folgenden werden die Erfindung und ihre Vorteile anhand eines Ausführungsbeispiels unter Zuhilfenahme der Zeichnung dargestellt.

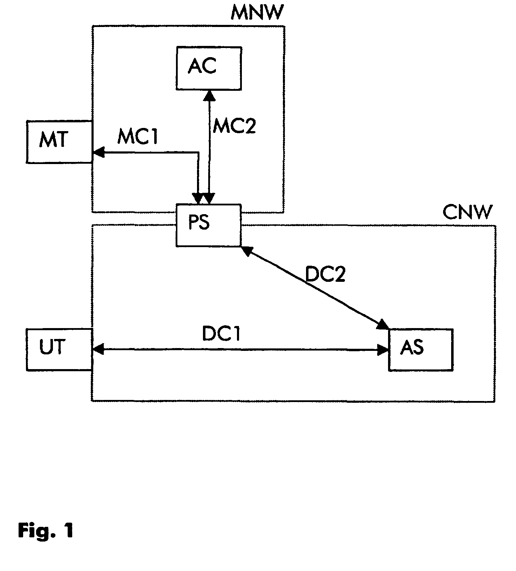

- Figur 1: zeigt ein Beispiel einer Anordnung zur Ausführung des erfindungsgemässen Verfahrens aus einem erfindungsemässen Mobilfunk-Endgerät MT, einem erfindungsgemässen Passwortrechner PS, einem Benutzerrechner UT und einem erfindungsgemässen Zugangsrechner AS.

In Figur 1 ist eine Anordnung zur Ausführung der Erfindung dargestellt. Einem Benutzerrechner UT eines Benutzers soll dabei Zugang zu Betriebsmitteln eines Rechnernetzwerkes CNW geschaffen werden. Dem Rechnernetzwerk CNW gehören ausser dem Benutzerrechner UT ein Passwortrechner PS und ein Zugangsrechner AS an. Der Benutzerrechner UT, der Passwortrechner PS und der Zugangsrechner AS können z.B. Workstations oder Personal Computer sein. Die Betriebsmittel des Rechnernetzwerkes CNW sind z.B. Speicherplatz, Datentransportkapazität und Programme, die auf in Figur 1 nicht dargestellten Rechnern, über das Rechnernetzwerk CNW untereinander über Datenleitungen vernetzten Rechnern verfügbar sind. Für einen solchen Zugang muß der Benutzer an dem Benutzerrechner UT seine auch "User-ldentification" genannte Rechnerbenutzerkennung und ein Passwort eingeben. Zur Beschaffung des Passwortes baut der Benutzer mit seinem Mobilfunk-Endgerät MT eine in Figur 1 als Mobilfunkverbindung MC1 bezeichnete Verbindung über ein Mobilfunk-Telekommunikationsnetz MNW, das z.B. ein GSM900/1800 Mobilfunk-Telekommunikationsnetz (GSM = Global System for Mobile Communication) oder ein UMTS-Telekommunikationsnetzwerk sein kann (UMTS = Universal Mobile Telecommunications System), zu einem Passwortrechner PS auf. Das Mobilfunk-Endgerät MT weist Eingabemittel für Benutzereingaben, z.B. ein Mikrofon und eine Tastatur, Ausgabemittel zur Ausgabe von Sprache und zur Anzeige von Daten, z.B. einen Lautsprecher und ein LCD-Display, sowie Sende- und Empfangseinrichtungen zur Kommunikation in dem Mobilfunk-Telekommunikationsnetz MNW auf. Die Mobilfunkverbindung MC1 kann von dem Mobilfunk-Endgerät MT durch einen einfachen Tastendruck auf dessen Tastatur erfolgen, wenn z.B. eine Taste für einen solchen Verbindungsaufbau vorprogrammiert ist. Der Passwortrechner PS empfängt dann über eine Sende- und Empfangsschnittstelle von dem Mobilfunk-Telekommunikationsnetz im Zusammenhang mit der Verbindung mit dem Mobilfunk-Endgerät MT eine Benutzerkennung des Benutzers, z.B. dessen Teilnehmernummer in dem Mobilfunk-Telekommunikationsnetz MNW. Anhand der Benutzerkennung ermittelt der Passwortrechner PS, welchem Benutzer das Mobilfunk-Endgerät zugeordnet ist und ermittelt dann ein Passwort für den Benutzer, z.B. indem er eine Zufallszahl erzeugt, eine Erzeugungsalgorithmus anwendet oder ein Passwort aus gespeicherten, möglichen Passwörtern ausliest. Der Passwortrechner PS versendet das ermittelte Passwort an das Mobilfunk-Endgerät MT, das dieses Passwort dann z.B. auf einem Display anzeigt. Der Benutzer gibt dann seine Rechnerbenutzerkennung sowie sein auf dem Mobilfunk-Endgerät MT angezeigtes Passwort an dem Benutzerrechner UT ein, der beides auf einer Datenverbindung DC1 zu dem Zugangsrechner AS überträgt. Der Zugangsrechner AS fragt dann mit einem auf der Datenverbindung DC2 versendeten Fragetelegramm bei dem Passwortrechner PS an, welches Passwort für die Rechnerbenutzerkennung gültig ist. Der Passwortrechner PS antwortet dann mit dem gültigen Passwort. Es ist auch möglich, dass der Passwortrechner PS spontan, ohne Abfrage durch den Zugangsrechner AS, das Passwort an dem Zugangsrechner AS sendet, z.B. dann, wenn der Passwortrechner PS das Passwort an das Mobilfunk-Endgerät MT sendet. Nachdem der Zugangsrechner AS sowohl von dem Benutzerrechner UT als auch von dem Passwortrechner PS jeweils ein Passwort empfangen hat, vergleicht der Zugangsrechner AS diese Passwörter und gewährt dann, wenn das von dem Benutzerrechner UT empfangene Passwort mit dem von dem Passwortrechner PS empfangenen Passwort übereinstimmen, dem Benutzerrechner Zugang zu den Betriebsmitteln des Rechnernetzwerkes.

Es ist auch möglich, dass von dem Benutzer an dem Mobilfunk-Endgerät MT eine Kennungen eingegeben werden müssen, z.B. eine PIN (Personal Identification Number) als Benutzerkennung sowie eventuell zusätzlich ein weiterer Code als Authentifikationskennung. Das Mobilfunk-Endgerät MT sendet dann die PIN sowie eventuell zusätzlich die Authentifikationskennung an den Passwortrechner PS. Der Passwortrechner PS kann dann beispielsweise im Zusammenhang mit der obengenannten Benutzerkennung, z.B. der Rufnummer des Benutzers, ermitteln ob der Benutzer zur Abfrage eines Passwortes über das Mobilfunk-Endgerät MT authorisiert ist. Nur wenn der Benutzer authorisiert ist, sendet der Passwortrechner PS dann ein Passwort an das Mobilfunk-Endgerät MT.

Besonders vorteilhaft gestaltet sich die Erfindung, wenn der Benutzer weder eine Benutzerkennung noch eine Authentifikationskennung an dem Mobilfunk-Endgerät MT eingeben muss. Beide Kennungen können z.B. auf einer SIM-Card gespeichert sein, die in das Mobilfunk-Endgerät MT eingesteckt wird und mit deren Daten der Benutzer Zugang zu dem Mobilfunk-Telekommunikationsnetz MNW erhält.

In einer weiteren Variante der Erfindung werden die Benutzerkennung und, falls es so vorbestimmt ist, auch die Authentifikationskennung nicht von dem Mobilfunk-Endgerät MT an den Passwortrechner PS gesendet, sondern von einem Authentifikationszentrum AZ. Das Authentifikationszentrum AZ kann z.B. dasjenige Authentifikationszentrum sein, das auch für den berechtigten Zugang des Benutzers mit dem Mobilfunk-Endgerät MT zu dem . Mobilfunk-Telekommunikationsnetz MNW sorgt. Dabei ist es einerseits möglich, dass das Authentifikationszentrum AZ eine eigene Verbindung Mobilfunkverbindung MC2 zu dem Passwortrechner PS aufbaut und auf der Mobilfunkverbindung MC2 die Benutzerkennung und/oder die Authentifikationskennung an den Passwortrechner PS sendet, z.B. nach dieser an das Authentifikationszentrum AZ eine entsprechende Anfrage gesendet hat oder nachdem das Mobilfunk-Endgerät MT dem Authentifikationszentrum AZ dazu über das Mobilfunk-Telekommunikationsnetz MNW einen Auftrag gesendet hat. Es ist anderseits auch möglich, dass das Authentifikationszentrum AZ die Benutzerkennung und/oder die Authentifikationskennung in die Mobilfunkverbindung MC1 einkoppelt, z.B. auf einem Steuerkanal der Mobilfunkverbindung MC1.

In einer weiteren Ausgestaltung der Erfindung kann der Passwortrechner PS in den Zugangsrechner AS als ein Passwortrechnermodul integriert sein, so die Datenverbindung DC2 eine interne Verbindung zwischen dem Passwortrechner PS und dem Zugangsrechner AS ist.

Es ist auch möglich, dass das Mobilfunk-Endgerät MT in den Benutzerrechner UT integriert ist. Beispielsweise kann der Benutzerrechner UT ein Notebook-Rechner sein, der über eine Sende- und Empfangsschnittstelle zu dem Mobilfunk-Telekommunikationsnetz MNW verfügt. Die oben beschriebenen Funktionen des Mobilfunk-Endgerät MT im Zusammenwirken mit den Passwortrechner PS werden dann von dem Passwortrechner PS ausgeführt.

Das Rechnernetzwerk CNW kann z.B. auch ein Intranet eines Unternehmens sein, in das sich der Benutzerrechner UT, z.B. in der Ausführungsform des obengenannten Notebookrechners, über einen sogenannten Remote Access Server, in Figur 1 den Zugangsrechner AS aus der Feme einloggen kann.

In einer weiteren Ausführungsform erfüllt das Mobilfunk-Endgerät MT auch die Funktionen des Benutzerrechners UT, z.B. in Form eines Internet-fähigen Mobilfunk-Endgerätes. Auf der Datenverbindung DC1 wird dann beispielsweise das WAP-Protokoll eingesetzt (WAP = Wireless Access Protocol).

Es ist auch möglich, dass der Zugangsrechner AS ein Verkaufsautomat ist, der ein Bedienmodul in Form des Benutzerrechners UT aufweist und über die Datenverbindung DC2 mit dem Passwortrechner PS verbunden ist. Dann kann z.B. sichergestellt werden, dass der Benutzer berechtigt ist, von dem Verkaufsautomaten Leistungen zu beziehen. Der Passwortrechner PS kann beispielsweise nur dann ein Passwort zur Eingabe an dem Verkaufsautomaten über das Mobilfunk-Endgerät MT angeben, wenn der Benutzer ein Abbuchungskonto mit Guthaben bei dem Passwortrechner PS besitzt.

## Patentansprüche

1. Verfahren zur Zugangskontrolle eines Benutzers an einem Benutzerrechner (UT) zu einem Zugangsrechner (AS) über ein Rechnernetzwerk (CNW), bei dem der Benutzer sich durch Eingabe eines Passwortes an dem Benutzerrechner (UT), das von dem Benutzerrechner (UT) über eine Datenverbindung (DC1) an einen Zugangsrechner (AS) übertragen wird, bei dem Zugangsrechner (AS) authentifizieren kann und bei welchem das Passwort netzseitig generiert wird und dem Benutzer über eine gegenüber der Datenverbindung (DC1) unabhängigen Verbindung über ein Mobilfunk-Telekommunikationsnetz(MNW) übermittelt wird, **dadurch gekennzeichnet,**
- **dass** ein Mobilfunk-Endgerät (MT) des Benutzers eine Verbindung über ein Mobilfunk-Telekommunikationsnetz (MNW) zu einem Passwortrechner (PS) aufbaut, der mit dem Zugangsrechner (AS) verbunden ist,
- **dass** der Passwortrechner (PS) von dem Mobilfunk-Telekommunikationsnetz (MNW) im Zusammenhang mit der Verbindung mit dem Mobilfunk-Endgerät (MT) eine Benutzerkennung empfängt,
- **dass** der Passwortrechner (PS) anhand der Benutzerkennung ermittelt, welchem Benutzer das Mobilfunk-Endgerät (MT) zugeordnet ist,
- **dass** der Passwortrechner (PS) ein Passwort für den Benutzer ermittelt,
- **dass** der Passwortrechner (PS) das Passwort an den Zugangsrechner (AS) versendet,
- **dass** der Passwortrechner (PS) das Passwort über das Mobilfunk-Telekommunikationsnetz (MNW) an das Mobilfunk-Endgerät (MT) versendet,
- **dass** das Mobilfunk-Endgerät (MT) das Passwort ausgibt,
- **dass** der Benutzerrechner (UT) ein Passwort erfasst und an den Zugangsrechner (AS) übermittelt,
- und **dass** der Zugangsrechner (AS) dann, wenn das von dem Benutzerrechner (UT) empfangene Passwort mit dem von dem Passwortrechner (PS) empfangenen Passwort übereinstimmt, dem Benutzerrechner (UT) Zugang zu vorbestimmten Leistungen gewährt.

2. Verfahren nach Anspruch 1, **dadurch gekennzeichnet, dass** der Passwortrechner (PS) von dem Mobilfunk-Telekommunikationsnetz (MNW) im Zusammenhang mit der Verbindung mit dem Mobilfunk-Endgerät (MT) eine Authentifikationskennung empfängt und dass der Passwortrechner (PS) nur dann, wenn die Authentifikationskennung im Zusammenhang mit der Benutzerkennung den Benutzer zur Abfrage eines Passwortes über das Mobilfunk-Endgerät (MT) autorisiert, das Passwort an das Mobilfunk-Endgerät (MT) versendet.

3. Verfahren nach Anspruch 1, **dadurch gekennzeichnet, dass** das Passwort durch den Passwortrechner (PS) generiert wird und dass der Zugangsrechner (AS) das Passwort nur für einen einmaligen Zugang zu den vorbestimmten Leistungen als gültiges Passwort akzeptiert.

4. Verfahren nach Anspruch 1, **dadurch gekennzeichnet, dass** der Zugangsrechner (AS) das Passwort nur bei Verwendung innerhalb einer vorbestimmten Zeitspanne als gültiges Passwort für einen Zugang zu den vorbestimmten Leistungen akzeptiert.

5. Verfahren nach Anspruch 2, **dadurch gekennzeichnet, dass** die Benutzerkennung durch das Mobilfunk-Endgerät (MT) ermittelt und an den Passwortrechner (PS) versendet wird.

6. Verfahren nach Anspruch 2, **dadurch gekennzeichnet, dass** die Authentifikationskennung durch das Mobilfunk-Endgerät (MT) ermittelt und an den Passwortrechner (PS) versendet wird.

7. Verfahren nach Anspruch 2, **dadurch gekennzeichnet, dass** die Benutzerkennung von einem Authentifikationszentrum (AC) des Mobilfunk-Telekommunikationsnetzes (MNW) an den Passwortrechner (PS) versendet wird.

8. Verfahren nach Anspruch 2, **dadurch gekennzeichnet, dass** die Authentifikationskennung von einem Authentifikationszentrum (AC) des Mobilfunk-Telekommunikationsnetzes (MNW) an den Passwortrechner (PS) versendet wird.

9. Verfahren nach Anspruch 1, **dadurch gekennzeichnet, dass** der Zugangsrechner (AS) ein Verkaufsautomat ist, der ein Bedienmodul in Form des Benutzerrechners (UT) aufweist und über eine Datenverbindung(DC2) mit dem Passwortrechner (PS) verbunden ist und der Passwortrechner (PS) nur dann ein Passwort zur Eingabe an dem Verkaufsautomaten versendet, wenn der Benutzer ein Abbuchungskonto mit Guthaben beim Passwortrechner PS besitzt.

10. Zugangsrechner (AS) zur Ermittlung eines Passwortes für die Zugangskontrolle eines Benutzers eines Benutzerrechners zu einem Zugangsrechner (AS), wobei der Benutzer sich durch Eingabe des Passwortes an dem Benutzerrechner (UT), das von dem Benutzerrechner (UT) über eine Datenverbindung (DC1) an den Zugangsrechner (AS) übertragen wird, bei dem Zugangsrechner (AS) authentifizieren kann, **dadurch gekennzeichnet,**
- **dass** der Zugangsrechner (AS) erste Empfangsmittel aufweist, die so ausgestaltet sind, dass der Zugangsrechner (AS) von dem Benutzerrechner (UT) ein Passwort empfangen kann,
- **dass** der Zugangsrechner (AS) zweite Empfangsmittel aufweist, die so ausgestaltet sind, dass der Zugangsrechner (AS) von einem Passwortrechner (PS) ein Passwort empfangen kann, das der Passwortrechner (PS) einem Mobilfunk-Endgerät (MT) des Benutzers über eine Verbindung eines Mobilfunk-Telekommunikationsnetzes versendet hat,
- und **dass** der Zugangsrechner (AS) Zugangskontrollmittel aufweist, die so ausgestaltet sind, dass der Zugangsrechner (AS) dem Benutzerrechner (UT) Zugang zu vorbestimmten Leistungen dann gewähren kann, wenn das von dem Benutzerrechner (UT) empfangene Passwort mit dem von dem Passwortrechner (PS) empfangenen Passwort übereinstimmt.

11. Passwortrechner (PS) zur Ermittlung eines Passwortes für die Zugangskontrolle eines Benutzers eines Benutzerrechners zu einem Zugangsrechner (AS), wobei der Benutzer sich durch Eingabe des Passwortes an dem Benutzerrechner (UT), das von dem Benutzerrechner (UT) über eine Datenverbindung (DC1) an einen Zugangsrechner (AS) übertragen wird, bei dem Zugangsrechner (AS) authentifizieren kann, **dadurch gekennzeichnet,**
- **dass** der Passwortrechner (PS) erste Verbindungsmittel aufweist, die so ausgestaltet sind, dass der Passwortrechner (PS) eine Verbindung über ein Mobilfunk-Telekommunikationsnetz (MNW) mit einem Mobilfunk-Endgerät (MT) des Benutzers aufbauen kann und dass der Passwortrechner (PS) von dem Mobilfunk-Telekommunikationsnetz (MNW) im Zusammenhang mit der Verbindung mit dem Mobilfunk-Endgerät (MT) eine Benutzerkennung empfangen kann,
- **dass** der Passwortrechner (PS) erste Mittel aufweist, die so ausgestaltet sind, dass der Passwortrechner (PS) anhand der Benutzerkennung ermitteln kann, welchem Benutzer das Mobilfunk-Endgerät (MT) zugeordnet ist,
- **dass** der Passwortrechner (PS) Passwortmittel aufweist, die so ausgestaltet sind, dass der Passwortrechner (PS) ein Passwort für den Benutzer ermitteln kann,
- **dass** der Passwortrechner (PS) zweite Verbindungsmittel aufweist, die so ausgestaltet sind, dass der Passwortrechner (PS) das Passwort an den Zugangsrechner (AS) versenden kann,
- und **dass** der Passwortrechner (PS) Sendemittel aufweist, die so ausgestaltet sind, dass der Passwortrechner (PS) das Passwort über das Mobilfunk-Telekommunikationsnetz (MNW) an das Mobilfunk-Endgerät (MT) versenden kann.

## Claims

1. Method for controlling the access of a user at a user computer (UT) to an access computer (AS) via a computer network (CNW), in which the user can authenticate himself to an access computer (AS) by entering a password at the user computer (UT), the password being transmitted from the user computer (UT) over a data connection (DC1) to the access computer (AS), and in which the password is generated on the network side and transmitted to the user by a connection independent of the data connection (DC1) via a mobile telecommunications network (MNW), **characterized in that**
- a mobile radio telephone (MT) belonging to the user sets up a connection via a mobile telecommunications network (MNW) to a password computer (PS), which is linked to the access computer (AS),
- the password computer (PS) receives a user identification from the mobile telecommunications network (MNW) in relation to the connection with the mobile radio telephone (MT),
- the password computer (PS) determines from the user identification which user the mobile radio telephone (MT) is assigned to,
- the password computer (PS) determines a password for the user,
- the password computer (PS) sends the password to the access computer (AS),
- the password computer (PS) sends the password over the mobile telecommunications network (MNW) to the mobile radio telephone (MT),
- the mobile radio telephone (MT) outputs the password,
- the user computer (UT) records a password and transmits it to the access computer (AS),
- and the access computer (AS) then grants the user computer (UT) access to predetermined services, if the password received from the user computer (UT) matches the password received from the password computer (PS).

2. Method according to Claim 1, **characterized in that** the password computer (PS) receives an authentication code from the mobile telecommunications network (MNW) in relation to the connection with the mobile radio telephone (MT), and that the password computer (PS) only sends the password to the mobile radio telephone (MT) if the authentication code in conjunction with the user identification authorizes the user to request a password via the mobile radio telephone (MT).

3. Method according to Claim 1, **characterized in that** the password is generated by the password computer (PS) and that the access computer (AS) accepts the password as a valid password only for a single access to the predetermined services.

4. Method according to Claim 1, **characterized in that** the access computer (AS) accepts the password as a valid password only if used within a predetermined interval for access to the predetermined services.

5. Method according to Claim 2, **characterized in that** the user identification is determined by the mobile radio telephone (MT) and sent to the password computer (PS).

6. Method according to Claim 2, **characterized in that** the authentication code is determined by the mobile radio telephone (MT) and sent to the password computer (PS).

7. Method according to Claim 2, **characterized in that** the user identification is sent from an authentication centre (AC) of the mobile telecommunications network (MNW) to the password computer (PS).

8. Method according to Claim 2, **characterized in that** the authentication code is sent from an authentication centre (AC) of the mobile telecommunications network (MNW) to the password computer (PS).

9. Method according to Claim 1, **characterized in that** the access computer (AS) is a vending machine, which has a control module in the form of the user computer (UT) and is linked to the password computer (PS) via a data connection (DC2) and the password computer (PS) only sends a password for input to the vending machine if the user has a charge account with credit with the password computer PS.

10. Access computer (AS) for determining a password for controlling the access of a user of a user computer to an access computer (AS), wherein the user can authenticate himself to the access computer (AS) by entering at the user computer (UT) the password which is transmitted from the user computer (UT) over a data connection (DC1) to the access computer (AS), **characterized in that**
- the access computer (AS) has first receiving means which are developed such that the access computer (AS) can receive a password from the user computer (UT),
- the access computer (AS) has second receiving means which are developed such that the access computer (AS) can receive from a password computer (PS) a password which the password computer (PS) has sent to a mobile radio telephone (MT) belonging to the user via a connection of a mobile telecommunications network,
- and the access computer (AS) has access control means, which are developed such that the access computer (AS) can grant the user computer (UT) access to predetermined services if the password received from the user computer (UT) matches the password received from the password computer (PS).

11. Password computer (PS) for determining a password for controlling the access of a user of a user computer to an access computer (AS), wherein the user can authenticate himself to the access computer (AS) by entering at the user computer (UT) the password which is transmitted from the user computer (UT) over a data connection (DC1) to an access computer (AS), **characterized in that**
- the password computer (PS) has first connection means, which are developed such that the password computer (PS) can set up a connection via a mobile telecommunications network (MNW) to a mobile radio telephone (MT) belonging to the user and that the password computer (PS) can receive a user identification from the mobile telecommunications network (MNW) in relation to the connection to the mobile radio telephone (MT),
- the password computer (PS) has first means, which are developed such that the password computer (PS) can determine from the user identification which user the mobile radio telephone (MT) is assigned to,
- the password computer (PS) has password means which are developed such that the password computer (PS) can determine a password for the user,
- the password computer (PS) has second connection means which are developed such that the password computer (PS) can send the password to the access computer (AS),
- and the password computer (PS) has sending means which are developed such that the password computer (PS) can send the password via the mobile telecommunications network (MNW) to the mobile radio telephone (MT).

## Revendications

1. Procédé pour le contrôle d'accès d'un utilisateur sur un ordinateur d'utilisateur (UT) à un ordinateur d'accès (AS) au moyen d'un réseau d'ordinateurs (CNW), avec lequel l'utilisateur peut s'authentifier sur l'ordinateur d'accès (AS) par l'introduction d'un mot de passe sur l'ordinateur d'utilisateur (UT), qui est transmis par l'ordinateur d'utilisateur (UT) à un ordinateur d'accès (AS) au moyen d'une liaison de données (DC1), et avec lequel le mot de passe est généré côté réseau et est transmis à l'utilisateur au moyen d'une liaison indépendante par rapport à la liaison de données (DC1) via un réseau de télécommunication de téléphonie mobile (MNW), **caractérisé en ce que**
- un terminal de téléphonie mobile (MT) de l'utilisateur établit une liaison via un réseau de télécommunication de téléphonie mobile (MNW) avec un ordinateur de mot de passe (PS) qui est relié à l'ordinateur d'accès (AS),
- l'ordinateur de mot de passe (PS) reçoit du réseau de télécommunication de téléphonie mobile (MNW) un code d'utilisateur en rapport avec la liaison avec le terminal de téléphonie mobile (MT),
- l'ordinateur de mot de passe (PS) détermine à l'aide du code d'utilisateur à quel utilisateur le terminal de téléphonie mobile (MT) est attribué,
- l'ordinateur de mot de passe (PS) détermine un mot de passe pour l'utilisateur,
- l'ordinateur de mot de passe (PS) envoie le mot de passe à l'ordinateur d'accès (AS),
- l'ordinateur de mot de passe (PS) envoie le mot de passe par le réseau de télécommunication de téléphonie mobile (MNW) au terminal de téléphonie mobile (MT),
- le terminal de téléphonie mobile (MT) émet le mot de passe,
- l'ordinateur d'utilisateur (UT) enregistre un mot de passe et le transmet à l'ordinateur d'accès (AS),
- et l'ordinateur d'accès (AS) accorde à l'ordinateur d'utilisateur (UT) un accès à des prestations prédéfinies dans les cas où le mot de passe reçu de l'ordinateur d'utilisateur (UT) coïncide avec le mot de passe reçu de l'ordinateur de mot de passe (PS).

2. Procédé selon la revendication 1, **caractérisé en ce que** l'ordinateur de mot de passe (PS) reçoit un code d'authentification du réseau de télécommunication de téléphonie mobile (MNW) en rapport avec la liaison avec le terminal de téléphonie mobile (MT) et **en ce que** l'ordinateur de mot de passe (PS) envoie le mot de passe au terminal de téléphonie mobile (MT) seulement dans les cas où le code d'authentification en rapport avec le code d'utilisateur autorise l'utilisateur pour l'interrogation d'un mot de passe par le terminal de téléphonie mobile (MT).

3. Procédé selon la revendication 1, **caractérisé en ce que** le mot de passe est généré par l'ordinateur de mot de passe (PS) et **en ce que** l'ordinateur d'accès (AS) accepte le mot de passe seulement pour un accès unique aux prestations prédéfinies comme mot de passe valable.

4. Procédé selon la revendication 1, **caractérisé en ce que** l'ordinateur d'accès (AS) accepte le mot de passe seulement en cas d'utilisation dans un laps de temps prédéfini comme mot de passe valable pour un accès aux prestations prédéfinies.

5. Procédé selon la revendication 2, **caractérisé en ce que** le code d'utilisateur est déterminé par le terminal de téléphonie mobile (MT) et est envoyé à l'ordinateur de mot de passe (PS).

6. Procédé selon la revendication 2, **caractérisé en ce que** le code d'authentification est déterminé par le terminal de téléphonie mobile (MT) et est envoyé à l'ordinateur de mot de passe (PS).

7. Procédé selon la revendication 2, **caractérisé en ce que** le code d'utilisateur est envoyé par un centre d'authentification (AC) du réseau de télécommunication de téléphonie mobile (MNW) à l'ordinateur de mot de passe (PS).

8. Procédé selon la revendication 2, **caractérisé en ce que** le code d'authentification est envoyé par un centre d'authentification (AC) du réseau de télécommunication de téléphonie mobile (MNW) à l'ordinateur de mot de passe (PS).

9. Procédé selon la revendication 1, **caractérisé en ce que** l'ordinateur d'accès (AS) est un automate de vente qui présente un module de commande sous la forme de l'ordinateur d'utilisateur (UT) et est relié par une liaison de donnée (DC2) à l'ordinateur de mot de passe (PS) et l'ordinateur de mot de passe (PS) n'envoie un mot de passe pour l'entrée sur l'automate de vente que dans les cas où l'utilisateur possède un compte de prélèvement avec un solde créditeur sur l'ordinateur de mot de passe PS.

10. Ordinateur d'accès (AS) pour la détermination d'un mot de passe pour le contrôle d'accès d'un utilisateur d'un ordinateur d'utilisateur à un ordinateur d'accès (AS), l'utilisateur pouvant s'authentifier sur l'ordinateur d'accès (AS) par l'entrée du mot de passe sur l'ordinateur d'utilisateur (UT), qui est transmis par l'ordinateur d'utilisateur (UT) à l'ordinateur d'accès (AS) au moyen d'une liaison de données (DC1), **caractérisé en ce que**,
- l'ordinateur d'accès (AS) présente des premiers moyens de réception qui sont conçus de telle sorte que l'ordinateur d'accès (AS) peut recevoir un mot de passe de l'ordinateur d'utilisateur (UT),
- l'ordinateur d'accès (AS) présente des second moyens de réception qui sont conçus de telle sorte que l'ordinateur d'accès (AS) peut recevoir d'un ordinateur de mot de passe (PS) un mot de passe que l'ordinateur de mot de passe (PS) a envoyé à un terminal de téléphonie mobile (MT) de l'utilisateur au moyen d'une liaison d'un réseau de télécommunication de téléphonie mobile,
- et l'ordinateur d'accès (AS) présente des moyens de contrôle d'accès qui sont conçus de telle sorte que l'ordinateur d'accès (AS) peut accorder à l'ordinateur d'utilisateur (UT) un accès à des prestations prédéfinies lorsque le mot de passe reçu de l'ordinateur d'utilisateur (UT) coïncide avec le mot de passe reçu de l'ordinateur de mot de passe (PS).

11. Ordinateur de mot de passe (PS) pour le calcul d'un mot de passe pour le contrôle d'accès d'un utilisateur d'un ordinateur d'utilisateur avec un ordinateur d'accès (AS), l'utilisateur pouvant s'authentifier sur un ordinateur d'accès (AS) par l'entrée du mot de passe sur l'ordinateur d'utilisateur (UT), qui est transmis de l'ordinateur d'utilisateur (UT) à un ordinateur d'accès (AS) au moyen d'une liaison de donnée (DC1), **caractérisé en ce que**,
- le calculateur de mot de passe (PS) présente des premiers moyens de liaison qui sont conçus de telle sorte que l'ordinateur de mot de passe (PS) peut établir une liaison par un réseau de télécommunication de téléphonie mobile (MNW) avec un terminal de téléphonie mobile (MT) de l'utilisateur et **en ce que** l'ordinateur de mot de passe (PS) peut recevoir un code d'utilisateur du réseau de télécommunication de téléphonie mobile (MNW) en rapport avec la liaison avec le terminal de téléphonie mobile (MT),
- l'ordinateur de mot de passe (PS) présente des premiers moyens qui sont conçus de telle sorte que l'ordinateur de mot de passe (PS) peut déterminer à l'aide du code d'utilisateur à quel utilisateur le terminal de téléphonie mobile (MT) est attribué,
- l'ordinateur de mot de passe (PS) présente des moyens de mot de passe qui sont conçus de telle sorte que l'ordinateur de mot de passe (PS) peut déterminer un mot de passe pour l'utilisateur,
- l'ordinateur de mot de passe (PS) présente des seconds moyens de liaison qui sont conçus de telle sorte que l'ordinateur de mot de passe (PS) peut envoyer le mot de passe à l'ordinateur d'accès (AS),
- et **en ce que** l'ordinateur de mot de passe (PS) présente des moyens d'émission qui sont conçus de telle sorte que l'ordinateur de mot de passe (PS) peut envoyer le mot de passe au moyen du réseau de télécommunication de téléphonie mobile (MNW) au terminal de téléphonie mobile (MT).
